(19) Europäisches Patentamt
European Patent Office
Office européen des brevets

(11) **EP 3 840 422 B1**

(12) **FASCICULE DE BREVET EUROPEEN**

(45) Date de publication et mention de la délivrance du brevet:
**23.08.2023 Bulletin 2023/34**

(21) Numéro de dépôt: **20214614.8**

(22) Date de dépôt: **16.12.2020**

(51) Classification Internationale des Brevets (IPC):
***H04S 7/00*** *(2006.01)*

(52) Classification Coopérative des Brevets (CPC):
**H04S 7/301; H04S 7/303;** H04R 2499/11;
H04S 2400/13

(54) **PROCEDE D'EQUILIBRAGE DE VOIES AUDIO UTILISANT LA GEOLOCALISATION UWB**

VERFAHREN ZUM ABGLEICH VON AUDIO-KANÄLEN MITHILFE VON UWB-GEOLOKALISIERUNG

AUDIO BALANCING METHOD USING UWB GEOLOCATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2019 FR 1914657**

(43) Date de publication de la demande:
**23.06.2021 Bulletin 2021/25**

(73) Titulaire: **SAGEMCOM BROADBAND SAS**
**92500 Rueil-Malmaison (FR)**

(72) Inventeurs:
• **SABATIER, Pierre**
**92500 RUEIL MALMAISON (FR)**
• **BOURGOIN, Gilles**
**92500 RUEIL MALMAISON (FR)**

(74) Mandataire: **Lavaud, Thomas**
**Cabinet Boettcher**
**5, rue de Vienne**
**75008 Paris (FR)**

(56) Documents cités:
**FR-A1- 2 877 534**   **US-A1- 2007 116 306**
**US-A1- 2011 069 841**   **US-A1- 2013 294 618**
**US-A1- 2015 382 128**

**Description**

L'invention concerne le domaine de l'équilibrage des voies audio d'un système de diffusion audio.

ARRIERE PLAN DE L'INVENTION

Les concepteurs de systèmes de diffusion audio cherchent constamment à améliorer la qualité des signaux sonores émis par leurs systèmes de diffusion audio, et donc le ressenti sonore des utilisateurs.

Les concepteurs tentent bien sûr pour cela, au moment de la conception et de la fabrication de ces systèmes de diffusion audio, d'améliorer les qualités acoustiques intrinsèques de leurs systèmes de diffusion audio.

Les concepteurs tentent aussi d'améliorer la prise en compte en fonctionnement, par le système de diffusion audio, de l'environnement dans lequel il se trouve et du ressenti sonore de l'utilisateur.

Ainsi, certaines enceintes connectées récentes intègrent des processeurs de traitement audio qui optimisent la diffusion audio en fonction de l'acoustique de leur environnement. Chacune de ces enceintes connectées comprend un réseau de microphones intégré dans l'enceinte connectée. L'enceinte connectée émet des signaux acoustiques de test, utilise le réseau de microphones pour acquérir des signaux résultants issus de réflexions desdits signaux acoustiques de test, et exploite les signaux résultants pour définir l'environnement de l'enceinte connectée. L'enceinte connectée adapte alors certains paramètres de réglage à cet environnement pour optimiser la diffusion audio.

Certains amplificateurs multicanaux, utilisés par exemple dans des installations de *Home-Cinéma,* permettent à l'utilisateur de régler manuellement les niveaux des différentes voies audio en utilisant une télécommande. Le rendu sonore est très bon, mais ce réglage manuel est réalisé à travers des menus qui sont très complexes à manipuler, en particulier pour un utilisateur qui n'est pas familier de ce type de technologie. Par ailleurs, ces réglages ne sont plus valables lorsque l'utilisateur change de position.

Le document US 2015/0382128 A1 décrit un système de calibrage et d'ajustement de la sortie audio d'une console de jeu et de divertissement. Le système comporte un mécanisme de calibration pour guider un utilisateur dans la calibration d'un niveau de pression sonore de chacun des haut-parleurs à un niveau spécifié ou pour effectuer un ajustement automatique du niveau de pression sonore de chaque haut-parleur au niveau spécifié. Le mécanisme de calibration sauvegarde les données d'atténuation utilisées par un dispositif de sortie audio qui est utilisé pour recréer une sortie audio au niveau ou à un niveau proche du niveau spécifié pendant la lecture audio ultérieure et dirige l'utilisateur pour positionner un microphone à une position de calibration de microphone pour chacune des opérations de calibration.

Le document US 2013/0294618 A1 décrit un système qui comporte un ensemble de stations périphériques qui reproduisent un signal audio transmis par un ensemble de stations centrales. Un appareil reconnaît l'emplacement d'un objet, c'est-à-dire d'un auditeur. Un dispositif informatique calcule un ensemble de paramètres sonores à un point de l'emplacement de l'auditeur. Un autre dispositif informatique calcule un ensemble de paramètres d'accord et génère des données de commande pour accorder les stations périphériques. Un outil de commande de puissance accorde un ensemble de paramètres sonores des stations périphériques sur la base des paramètres d'accord, et est disposé avec une unité d'alimentation électrique. Le dispositif peut utiliser la méthode ultra-large bande pour déterminer l'emplacement de l'auditeur.

OBJET DE L'INVENTION

L'invention a pour objet d'optimiser la diffusion audio et le ressenti sonore fournis par un système de diffusion audio, sans que cette optimisation ne nécessite de manipulations complexes pour l'utilisateur.

RESUME DE L'INVENTION

En vue de la réalisation de ce but, on propose un procédé d'équilibrage d'une pluralité de voies audio selon la revendication 1.

Le procédé d'équilibrage selon l'invention détecte donc en temps réel la position courante de l'équipement mobile et donc de l'utilisateur en possession de l'équipement mobile, et équilibre les voies audio en fonction de la position courante. Ainsi, quelle que soit la position de l'utilisateur, les voies audio sont équilibrées en temps réel et automatiquement, de sorte que l'utilisateur n'a aucun réglage à effectuer pour obtenir cette diffusion audio optimisée.

Dans le procédé d'équilibrage selon l'invention, les haut-parleurs sont intégrés dans des enceintes, et les ancres UWB sont intégrés dans lesdites enceintes.

On propose aussi un procédé d'équilibrage tel que précédemment décrit, dans lequel la phase de calibration utilise l'équipement mobile comprenant un microphone ou un équipement de test comprenant un microphone, et comprend les étapes de :

- lorsque l'équipement mobile ou l'équipement de test se trouve dans la position de calibration, commander une émission, via chacune des voies audio successivement, d'un signal acoustique de calibration émis, et, pour chaque voie audio :
- acquérir en utilisant le microphone de l'équipement mobile ou de l'équipement de test un signal acoustique de calibration reçu résultant de l'émission du signal acoustique de calibration émis via ladite voie audio ;
- définir le gain de calibration à partir d'au moins une caractéristique du signal acoustiques de calibration reçu.

On propose aussi un procédé d'équilibrage tel que précédemment décrit, dans lequel la phase d'acquisition comprend de plus l'étape d'acquérir, pour chaque voie audio, une distance de calibration entre la position de calibration et une enceinte intégrant le haut-parleur de ladite voie audio, et dans lequel la phase opérationnelle comprend de plus les étapes de :

- estimer, pour chaque voie audio, une distance opérationnelle entre l'équipement mobile et l'enceinte intégrant le haut-parleur de ladite voie audio ;
- définir, pour ladite voie audio, le gain opérationnel en fonction de la distance de calibration, de la distance opérationnelle et du gain de calibration associés à ladite voie audio.

On propose aussi un procédé d'équilibrage tel que précédemment décrit, dans lequel le haut-parleur d'une voie audio i est intégré dans une enceinte omnidirectionnelle, et dans lequel le gain opérationnel de ladite voie audio i est tel que :
$G_{opi}=G_{cali}+20*Log10(D_{opi}/D_{cali})$, où $G_{cali}$ est le gain de calibration (en dB), $D_{cali}$ est la distance de calibration et $D_{opi}$ est la distance opérationnelle associés à ladite voie audio.

On propose aussi un procédé d'équilibrage tel que précédemment décrit, dans lequel le haut-parleur d'une voie audio est intégré dans une enceinte directionnelle, dans lequel une ancre UWB comprenant deux antennes UWB est intégrée dans ladite enceinte directionnelle de sorte que les antennes UWB sont positionnées de part et d'autre d'un axe de symétrie d'un diagramme de directivité de l'enceinte directionnelle, dans lequel la phase d'acquisition comprend l'étape d'acquérir un angle de calibration entre l'axe de symétrie et une direction de calibration passant par la position de calibration et par l'enceinte directionnelle, dans lequel la phase opérationnelle comprend l'étape d'estimer un angle opérationnel entre l'axe de symétrie et une direction opérationnelle passant par la position courante et par l'enceinte directionnelle, et dans lequel le gain opérationnel associé à ladite voie audio est estimé en utilisant l'angle de calibration et l'angle opérationnel.

On propose aussi un procédé d'équilibrage tel que précédemment décrit, dans lequel le gain opérationnel de ladite voie audio i est défini par :

$$G_{opi}=G_{cali}-20*Log10(P(\Theta_{opi})/P(\Theta_{cali}))+20*Log10(D_{opi}/D_{cali}),$$

où, pour ladite voie audio i, $G_{cali}$ est le gain de calibration (en dB), $D_{cali}$ est la distance de calibration, $D_{opi}$ est la distance opérationnelle, $P(\Theta_{opi})$ est un niveau de pression acoustique d'émission de l'enceinte dans la direction opérationnelle et $P(\Theta_{cali})$ est un niveau de pression acoustique d'émission de l'enceinte dans la direction de calibration.

On propose aussi un procédé d'équilibrage tel que précédemment décrit, dans lequel une enceinte intégrant le haut-parleur d'une voie audio ne comprend pas d'ancre UWB, la phase de calibration comprenant en outre les étapes de faire positionner l'équipement mobile dans une position rapprochée à proximité de ladite enceinte, de mettre en oeuvre la géolocalisation UWB pour déterminer la position rapprochée, d'assimiler la position effective de l'enceinte à la position rapprochée, l'estimation de la distance de calibration et l'estimation de la distance opérationnelle associées à ladite voie audio étant réalisées en utilisant la position effective de l'enceinte.

On propose aussi un procédé d'équilibrage tel que précédemment décrit, dans lesquels les gains opérationnels sont mis à jour uniquement lorsque l'équipement mobile (10) a subi un déplacement supérieur à un seuil prédéterminé par rapport à sa position courante précédente.

On propose aussi un procédé d'équilibrage tel que précédemment décrit, dans lequel la phase d'acquisition comprend l'étape d'acquérir un déphasage pour produire un son immersif dans la position de calibration, et dans lequel la phase opérationnelle comprend l'étape de calculer en fonction de la position courante un retard appliqué au son immersif.

On propose aussi un procédé d'équilibrage tel que précédemment décrit, dans lequel les gains de calibration et/ou les niveaux de pression acoustique d'émission des enceintes dans les directions de calibration, utilisés au cours de la phase opérationnelle pour définir les gains opérationnels, dépendent d'une fréquence d'un signal acoustique diffusé au cours de la phase opérationnelle par les voies audio.

On propose en outre un équipement comprenant un composant de traitement dans lequel est mis en oeuvre le procédé d'équilibrage qui vient d'être décrit.

On propose de plus un équipement tel que celui qui vient d'être décrit, l'équipement étant un *smartphone.*

On propose de plus un équipement tel que celui qui vient d'être décrit, l'équipement étant une enceinte connectée.

On propose aussi un programme d'ordinateur comprenant des instructions qui conduisent l'équipement tel que celui qui vient d'être décrit à exécuter les étapes du procédé d'équilibrage précédemment décrit.

On propose en outre un support d'enregistrement lisible par ordinateur, sur lequel est enregistré le programme d'ordinateur précédemment décrit.

L'invention sera mieux comprise à la lumière de la description qui suit de modes de mise en oeuvre particuliers non limitatifs de l'invention.

## BREVE DESCRIPTION DES DESSINS

Il sera fait référence aux dessins annexés, parmi lesquels :

[Fig. 1] la figure 1 représente une habitation dans laquelle sont positionnés un *smartphone* et des enceintes intégrant chacune une ancre UWB ;

[Fig. 2] la figure 2 représente des composants du *smartphone ;*

[Fig. 3] la figure 3 représente des composants d'une enceinte ;

[Fig. 4] la figure 4 représente des ancres UWB et le *smartphone* lors d'une géolocalisation UWB mise en oeuvre dans le procédé d'équilibrage selon l'invention ;

[Fig. 5] la figure 5 représente les enceintes, le *smartphone,* les distances de calibration et les distances opérationnelles lors de la mise en oeuvre du procédé d'équilibrage selon un premier mode de réalisation de l'invention ;

[Fig. 6] la figure 6 représente des étapes d'une phase de calibration du procédé d'équilibrage ;

[Fig. 7] la figure 7 représente des étapes d'une phase opérationnelle du procédé d'équilibrage ;

[Fig. 8] la figure 8 représente des enceintes, des ancres UWB et le *smartphone* agencés selon un agencement non couvert par l'invention telle que revendiquée ;

[Fig. 9] la figure 9 représente une enceinte et deux antennes UWB d'une ancre UWB ;

[Fig. 10] la figure 10 illustre une méthode pour déterminer un angle d'arrivée d'un signal UWB ;

[Fig. 11] la figure 11 représente un utilisateur dans la position de calibration et l'enceinte de la figure 9 ;

[Fig. 12] la figure 12 représente des étapes d'une phase de calibration d'un procédé d'équilibrage selon un autre mode de réalisation de l'invention ;

[Fig. 13] la figure 13 représente des étapes d'une phase opérationnelle du procédé d'équilibrage.

## DESCRIPTION DETAILLEE DE L'INVENTION

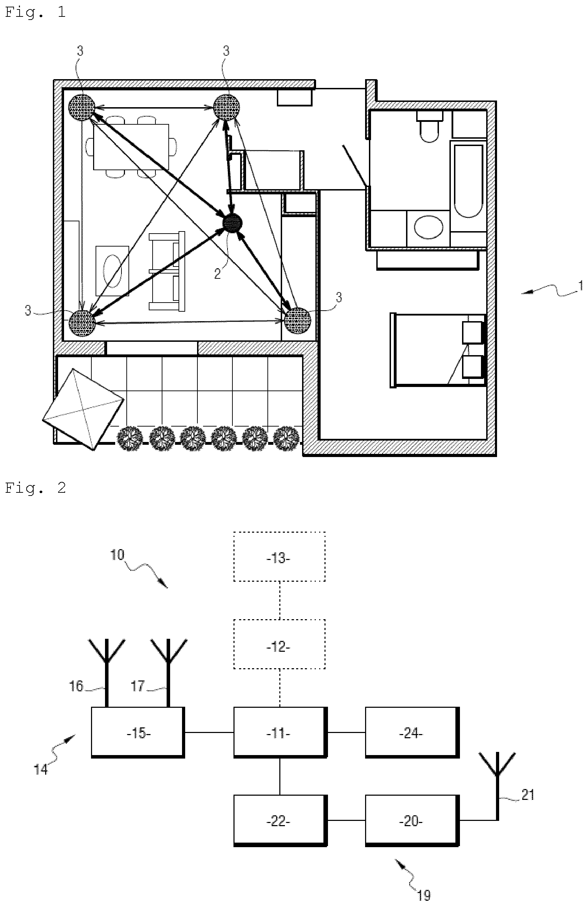

En référence à la figure 1, le procédé d'équilibrage selon l'invention est destiné à équilibrer en temps réel, en fonction de la position courante d'un équipement mobile 1 porté par un utilisateur, les voies audio d'un système de diffusion audio localisé par exemple dans une habitation 2.

Chaque voie audio comporte un haut-parleur intégré dans une enceinte connectée 3.

Dans cette description, l'équipement mobile 1 est un *smartphone.*

Le *smartphone* comprend ou est relié à un dispositif de géolocalisation UWB (pour *Ultra-Wide Band,* en anglais, ou ultra-large bande).

La position courante du *smartphone* est déterminée via une géolocalisation UWB. Cette géolocalisation UWB est relativement précise (de l'ordre du cm). Le dispositif de géolocalisation UWB du *smartphone* coopère pour cela avec des ancres UWB qui sont possiblement mais pas nécessairement intégrées dans les enceintes.

En référence à la figure 2, le *smartphone* 10 comprend tout d'abord un processeur central 11 qui est contrôlé par un système d'exploitation 12.

Le processeur central 11 est adapté à exécuter des instructions d'une application 13 pour mettre en oeuvre le procédé d'équilibrage selon l'invention.

Le *smartphone* 10 comprend de plus un dispositif de communication, qui est une interface de communication Wi-Fi 14 (native) comprenant un composant de communication Wi-Fi 15, une première antenne 16 et une deuxième antenne 17. Le composant de communication Wi-Fi 15 comprend une voie à 2.4GHz reliée à la première antenne 16 et une voie à 5GHz reliée à la deuxième antenne 17.

Le *smartphone* 10 comprend de plus un dispositif de géolocalisation 19. Le dispositif de géolocalisation 19 est agencé pour mettre en oeuvre une géolocalisation UWB du *smartphone* 10.

Le dispositif de géolocalisation 19 est ici embarqué nativement dans le *smartphone* 10. Le dispositif de géolocalisation 19 comprend un composant de communication 20, une antenne 21 et un microcontrôleur 22. Le microcontrôleur 22 est relié au processeur central 11 via une interface filaire (par exemple I2C, série, etc.) ou sans fil (par exemple Bluetooth).

Alternativement, le dispositif de géolocalisation pourrait comprendre un tag UWB. Le tag UWB serait alors positionné le plus proche possible du *smartphone,* voire intégré dans le *smartphone.*

Le *smartphone* 10 comprend aussi un microphone 24.

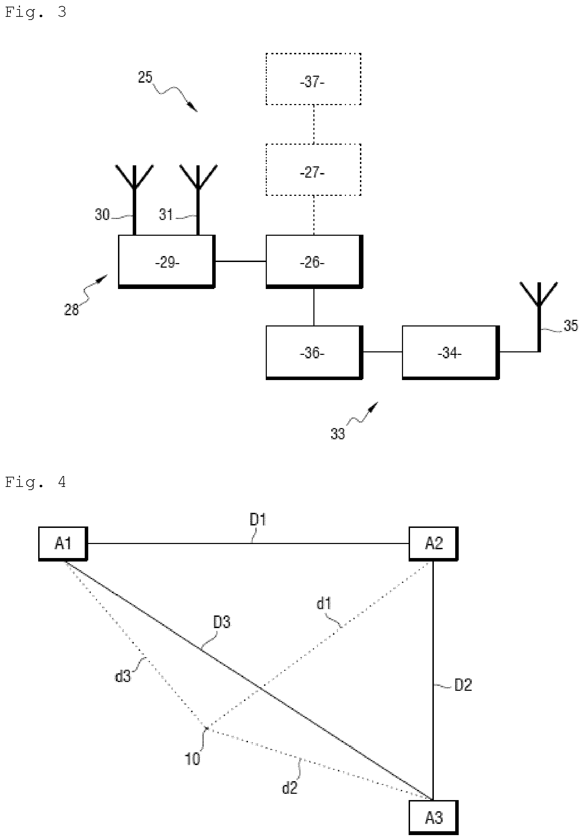

En référence à la figure 3, chaque enceinte 25 comprend au moins un haut-parleur (non représenté). L'enceinte 25 comprend de plus un processeur central 26 qui est contrôlé par un système d'exploitation 27.

L'enceinte 25 comprend de plus une interface de communication Wi-Fi 28 comprenant un composant de communication Wi-Fi 29, une première antenne 30 et une deuxième antenne 31. Le composant de communication Wi-Fi 29 comprend une voie à 2.4GHz reliée à la première antenne 30 et une voie à 5GHz reliée à la deuxième antenne 31.

L'enceinte 25 comprend de plus un dispositif de géolocalisation 33. Le dispositif de géolocalisation 33 comporte un composant de communication UWB 34, une antenne UWB 35 et un microcontrôleur 36. Le microcontrôleur 36 est relié au processeur central 26 via une liaison série. Le microcontrôleur 36 dialogue avec le composant de communication UWB 34 et fournit au processeur central 26 des informations de localisation. Le système d'exploitation 27 permet de gérer ces informations de localisation.

Le processeur central 26 est adapté à exécuter des instructions d'un logiciel 37 pour mettre en oeuvre la géolocalisation du *smartphone* 10.

Le système d'exploitation 27 rend disponible les informations de positionnement, par exemple via une interface logicielle ou une API (pour *Application Programming Interface).* Les informations de positionnement sont récupérées puis traitées par une application.

Chaque enceinte 25 est enregistrée au moment de l'installation avec un numéro unique, par exemple son adresse « MAC ».

Le *smartphone* 10 communique avec les enceintes 25 grâce à une liaison Wi-Fi. Les enceintes 25 communiquent entre elles via une liaison Wi-Fi.

On décrit maintenant plus en détail le fonctionnement de la géolocalisation UWB.

Les dispositifs de géolocalisation des enceintes forment les ancres UWB.

La géolocalisation UWB est ici basée sur une trilatération effectuée à partir de mesures de distances entre différents éléments.

La distance entre les éléments pris deux à deux est obtenue grâce à la mesure du temps de vol d'un signal radioélectrique impulsionnel à large bande qui a la propriété de voyager en ligne droite et de franchir les obstacles d'un environnement rencontré dans une habitation, ou, plus généralement, dans un bâtiment quelconque.

En référence à la figure 4, en utilisant un réseau établi de points fixes (les ancres UWB A1, A2, A3) formant un repère (non forcément orthonormé), dont les positions relatives sont évaluées par le système à partir des distances les séparant (distances D1, D2 & D3), on localise précisément le *smartphone* 10 en position absolue par rapport au repère.

La position du *smartphone* 10 se trouve à l'intersection des sphères centrées sur chaque ancre UWB. Le rayon d'une sphère centrée sur une ancre UWB correspond à la distance, calculée à partir du temps de vol du signal UWB, entre le *smartphone* 10 et ladite ancre UWB.

Ici, avec un réseau de 3 ancres, on calcule les distances estimées du *smartphone* 10 par rapport aux différentes ancres, c'est-à-dire d1, d2, d3.

On illustre maintenant l'acquisition des données de géolocalisation en utilisant un exemple de sélection de composants.

On utilise par exemple la solution de localisation DECAWAVE MDEK1001. Le composant de communication UWB 20 du *smartphone* 10 est le composant DECAWAVE DW1000. Le microcontrôleur 22 du *smartphone* 10 est le microcontrôleur contenant un *firmware* DECAWAVE permettant d'exploiter le composant de communication UWB. Les deux composants communiquent entre eux via une liaison série.

Le microcontrôleur utilisé dans la suite de la description est de type NORDIC, sans que la solution décrite ne soit limitée à ce type de microcontrôleur. D'autres types de microcontrôleurs, tels que STM32, peuvent être utilisés. Le système peut également fonctionner sans microcontrôleur, en utilisant une connexion directe avec le microprocesseur central.

Le composant de communication UWB est en charge de former et de transmette les signaux des impulsions radiofréquences définies par le microcontrôleur NORDIC, et de recevoir et de décoder les impulsions radiofréquences reçues pour en extraire les données utiles et les transmettre au microcontrôleur NORDIC.

Le microcontrôleur NORDIC est en charge de configurer et d'exploiter le composant de communication UWB pour générer les salves, et décoder les salves en retour, permettant ainsi de calculer, à partir de temps de vol aller/retour, la distance entre les équipements. Il est donc à même d'obtenir directement les distances séparant le composant de communication UWB des autres équipements, mais également d'obtenir des autres équipements les informations complémentaires des distances respectives des autres équipements entre eux. A partir de la connaissance des différentes distances, il est en charge d'évaluer la position géographique de chaque équipement par rapport à un réseau d'ancres de calibration. Pour cela, il met en oeuvre un procédé de trilatération.

Le microcontrôleur NORDIC est également en charge de communiquer avec le processeur central 11 du *smartphone* 10 via un port série monté au travers d'une liaison USB, ou directement au travers d'une liaison série, ou encore au travers d'une liaison *Bluetooth*. Il est ainsi à même de recevoir des commandes pour effectuer des actions spécifiques, et de transmettre au processeur central 11 des réponses.

Le microcontrôleur NORDIC offre un certain nombre de commandes qui permettent de déclencher un certain nombre d'actions, et d'obtenir un certain nombre d'actions en retour. Il est également possible de rajouter des commandes à celles existantes, car l'environnement de développement est ouvert, et le code source entièrement documenté.

Dans son mode de fonctionnement par défaut, le microcontrôleur NORDIC transmet de façon périodique sur la liaison série porté par le lien USB un compte rendu de l'état du système sous forme de chaînes de caractères. Un exemple de chaîne de caractères correspondant à la localisation est le suivant :

{'timestamp': 1569763879.354127, 'x': 2.168, 'y': 0.62844, 'type': 'tag'}
{'timestamp': 1569763879.937741, 'type': 'anchor', 'x': 0.0, 'y': 0.0}
{'timestamp': 1569763879.9407377, 'type': 'anchor', 'dist': 3.287105, 'x': 3.5, 'y': 0.0}
{'timestamp': 1569763879.943739, 'type': 'anchor', 'dist': 9.489347, 'x': 3.5, 'y': 9.0}

Ces données sont aisément décomposables. Chaque ligne correspond à l'un des équipements du système (enceinte 25 ou *smartphone* 10), et on y décèle facilement les champs suivants associés à une valeur :

- *timestamp :* date de transmission du compte rendu par le dispositif de géolocalisation du *smartphone* 10 ;
- x et y : coordonnées en mètres de l'équipement par rapport au repère de calibration formé par les ancres UWB. Les coordonnées des ancres UWB sont retournées avec une précision arrondie à 0,5m près ;
- type : type de l'équipement : *tag* = *smartphone*, anchor = ancre UWB ;
- dist : distance en mètres entre le *smartphone* 10 et l'ancre UWB point de calibration du système. Cette information n'existe pas pour l'ancre de calibration.

On a donc quatre équipements dans cet exemple.

Le *smartphone* 10 est situé aux coordonnées x = 2.168 m ; y = 0.628 m.

L'ancre UWB de calibration est située aux coordonnées x = 0 m ; y = 0 m.

Une ancre UWB est située aux coordonnées x = 3.5 m ; y = 0 m, à une distance de 3.287 m de l'ancre de calibration.

Une ancre UWB est située aux coordonnées x = 3.5 m ; y = 9.0 m, à une distance de 9.489 m de l'ancre de calibration.

Ces informations sont fournies via la liaison USB au système d'exploitation 12 du processeur central 11 du *smartphone* 10. Il est aisé pour le logiciel embarqué dans le processeur central 11 de collecter ces informations et de les traiter.

On décrit maintenant plus précisément la mise en oeuvre du procédé d'équilibrage selon un premier mode de réalisation de l'invention. Dans le premier mode de réalisation, chaque haut-parleur d'une voie audio est intégré dans une enceinte distincte. Les enceintes sont connectées à un amplificateur audio. Les ancres UWB sont intégrées dans les enceintes.

On sait que les ondes sonores se propageant dans l'air sont atténuées comme le carré de la distance.

Le niveau sonore (ou niveau de pression acoustique) à l'endroit où est positionné l'utilisateur est inversement proportionnel à la distance au carré (-6dB par doublement de distance).

Le procédé d'équilibrage comporte tout d'abord une phase de calibration, qui consiste notamment à mesurer le niveau de pression acoustique à un endroit quelconque de la pièce.

Au cours de la phase de calibration, l'utilisateur muni du *smartphone* se positionne dans une position de calibration. La position de calibration est une position quelconque, par exemple à proximité des enceintes. La position de calibration n'est pas nécessairement la position d'écoute usuelle.

La position de calibration est tout d'abord déterminée grâce à la géolocalisation UWB, mise en oeuvre avec le *smartphone* et les ancres UWB intégrées dans les enceintes. On obtient donc les coordonnées de la position de calibration dans le repère formé par les ancres UWB.

Puis, pour chaque voie audio, une distance de calibration entre le *smartphone* et l'enceinte intégrant le haut-parleur de ladite voie audio est déterminée à partir de la position de calibration.

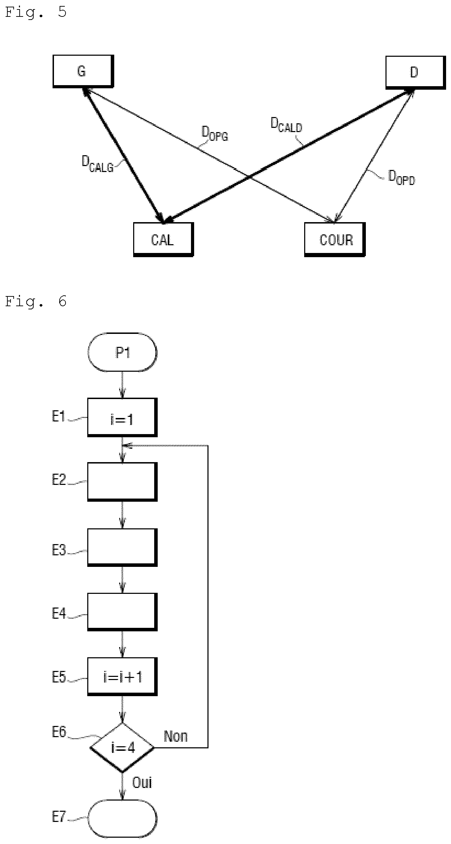

Ainsi, sur l'exemple de la figure 5, le système de diffusion audio comporte une voie audio gauche comprenant une enceinte gauche G et une voie audio droite comprenant une enceinte droite D.

La distance de calibration $D_{CALG}$ est la distance, dans la position de calibration CAL, entre le *smartphone* et l'enceinte gauche G. La distance de calibration $D_{CALD}$ est la distance, dans la position de calibration CAL, entre le *smartphone* et l'enceinte droite D.

L'application mise en oeuvre dans le processeur central (références 12 et 13 sur la figure 2) du *smartphone* récupère alors les distances de référence.

Le *smartphone* commande alors une émission, via chacune des voies audio successivement, d'un signal acoustique de calibration émis. Pour chaque voie audio, le *smartphone* acquiert en utilisant son microphone un signal acoustique de calibration reçu, résultant de l'émission du signal acoustique de calibration émis via ladite voie audio.

On obtient de la sorte une mesure intrinsèque des niveaux sonores via le microphone du *smartphone.*

Puis, pour chaque voie audio, le *smartphone* définit le gain de calibration associé à ladite voie audio à partir d'au moins une caractéristique du signal acoustiques de calibration reçu. Les gains de calibration permettent d'équilibrer les voies audio dans la position de calibration.

Un exemple de mise en oeuvre de la phase de calibration est visible sur la figure 6. Dans cet exemple, le système de diffusion audio comporte quatre voies audio : voies audio 1, 2, 3, 4.

Suite au lancement de la phase de calibration (P1), la variable i est initialisée à 1 :

i = 1 (étape E1).

Puis, la distance de calibration entre la position de calibration et l'enceinte de la voie audio i (c'est-à-dire de la voie audio 1) est mesurée grâce à la géolocalisation UWB (étape E2).

Le signal acoustique de calibration émis est envoyé par l'enceinte de la voie audio i. Le signal acoustique de calibration reçu est acquis par le *smartphone.* Le gain perçu par le smartphone est stocké (étape E4).

La variable i est incrémentée :

i = i + 1 (étape E5)

Puis, au cours de l'étape E6, on vérifie si la variable i a atteint la valeur correspondant au nombre total de voies audio du système de diffusion audio (quatre ici).

Si c'est le cas, la phase de calibration s'achève (étape E7). Sinon, la phase de calibration revient à l'étape E2.

Le *smartphone* équilibre alors les différents niveaux sonores en jouant sur les gains des enceintes.

Le *smartphone* définit ainsi, dans la position de calibration, un gain de calibration pour chaque voie audio, les gains de calibration permettant d'équilibrer les voies audio dans la position de calibration.

Cet équilibrage permet de statuer qu'en un point de la pièce, c'est-à-dire dans la position de calibration, les voies audio sont équilibrées.

Une fois que la phase de calibration est réalisée, l'équilibrage est réalisé en temps réel, en fonction de la position courante de l'utilisateur (ou, plus précisément, en fonction de la position courante du *smartphone*).

Le procédé d'équilibrage comporte ainsi une phase opérationnelle mise en oeuvre en temps réel.

La phase opérationnelle consiste à utiliser la géolocalisation UWB pour définir la position courante du *smartphone* et, pour chaque voie audio, à produire un gain opérationnel qui dépend de la position courante du *smartphone,* de la position de calibration et du gain de calibration associés à ladite voie audio, les gains opérationnels permettant d'équilibrer les voies audio dans la position courante.

On estime pour chaque voie audio, à partir de la position courante, une distance opérationnelle entre le *smartphone* et l'enceinte intégrant le haut-parleur de ladite voie audio. Puis, on définit pour ladite voie audio le gain opérationnel en fonction de la distance de calibration, de la distance opérationnelle et du gain de calibration associés à ladite voie audio.

En revenant à la figure 5, la distance opérationnelle $D_{OPG}$ est la distance, dans la position courante COUR, entre le *smartphone* et l'enceinte gauche G. La distance opérationnelle $D_{OPD}$ est la distance, dans la position courante COUR, entre le *smartphone* et l'enceinte droite D.

Le gain opérationnel (en dB) d'une voie audio i est déterminé par la formule suivante :

$$G_{opi} = G_{cali} + 20 * Log10(D_{opi}/D_{cali}),$$

où $G_{cali}$ est le gain de calibration en dB, $D_{cali}$ est la distance de calibration et $D_{opi}$ est la distance opérationnelle associés à ladite voie audio i.

On obtient ainsi un gain opérationnel pour chaque voie audio.

Les gains opérationnels sont transmis aux enceintes par le *smartphone.* Sur chaque voie audio, le gain opérationnel associé à ladite voie audio est appliqué. Les voies audio sont de la sorte équilibrées dans la position courante.

On note que les gains opérationnels sont mis à jour uniquement lorsque le *smartphone* a subi un déplacement supérieur à un seuil prédéterminé par rapport à sa position courante précédente. Le seuil prédéterminé est par exemple égal à 30cm.

On évite ainsi de subir un effet de bruit de changement de gain lors de l'audition.

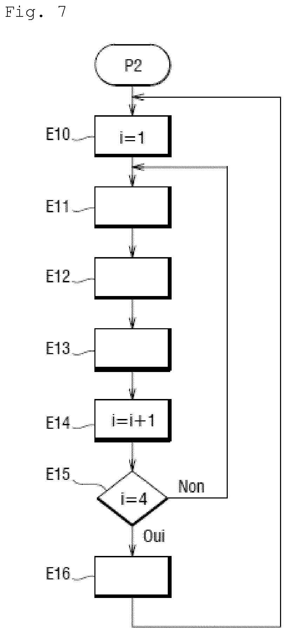

Un exemple de mise en oeuvre de la phase opérationnelle est visible sur la figure 7. Dans cet exemple, à nouveau, le système de diffusion audio comporte quatre voies audio : voies audio 1, 2, 3, 4.

Suite au lancement de la phase opérationnelle (P2), la variable i est initialisée à 1 :

i = 1 (étape E10).

Puis, la distance opérationnelle entre la position courante de l'équipement mobile et l'enceinte de la voie audio i est mesurée (étape E11).

Le gain opérationnel $G_{opi}$ pour la voie audio i est alors estimé (étape E12).

Le gain opérationnel $G_{opi}$ est alors appliqué sur la voie audio i (étape E13).

La variable i est incrémentée :

i = i + 1 (étape E14)

Puis, au cours de l'étape (E15), on vérifie si la variable i a atteint la valeur correspondant au nombre total de voies audio du système de diffusion audio.

Si ce n'est pas le cas, la phase opérationnelle revient à l'étape E11.

Si c'est le cas, une temporisation est appliquée, par exemple égale à 1s. Suite à cette temporisation, qui permet d'éviter le bruit de changement de gain lors de l'audition, l'utilisateur a potentiellement changé de position courante et la phase opérationnelle retourne à l'étape E10, pour rééquilibrer les voies audio en fonction de la nouvelle position courante.

On note que la temporisation pourrait être remplacée par un lissage, un filtrage, un moyennage des mesures, etc.

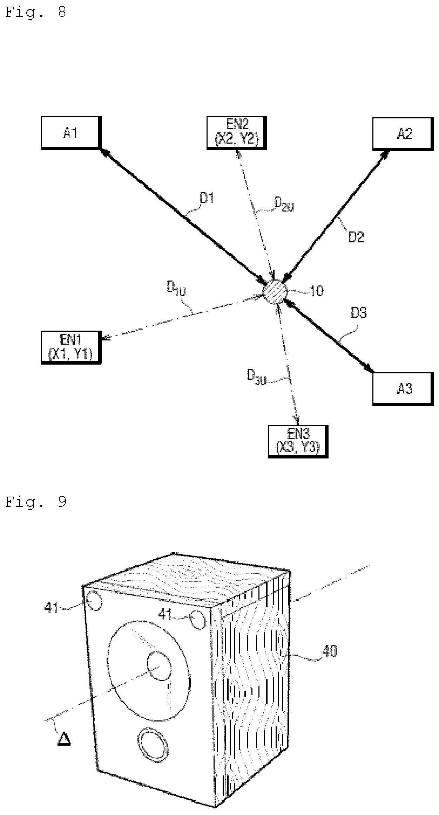

On décrit maintenant, en référence à la figure 8, un procédé d'équilibrage selon un deuxième mode de réalisation de l'invention.

Dans l'exemple de la figure 8, représentant un agencement non couvert par l'invention, le système de diffusion audio comporte cette fois trois enceintes EN1, EN2, EN3, qui intègrent chacune un haut-parleur d'une voie audio distincte.

Les ancres UWB A1, A2 et A3, au nombre de trois, ne sont cette fois pas intégrées dans les enceintes.

Il convient donc de déterminer, au cours de la phase de calibration, la position de chaque enceinte dans le référentiel des ancres UWB.

Au cours de la phase de calibration, l'application programmée dans le *smartphone* (c'est-à-dire l'application 13 de la figure 3) demande à l'utilisateur de positionner le *smartphone* dans une position rapprochée à proximité de chaque enceinte.

Le *smartphone* met en oeuvre la géolocalisation UWB pour déterminer la position rapprochée, et assimile la position effective de l'enceinte à la position rapprochée.

Concrètement, le nom des enceintes s'affiche sur l'écran du *smartphone,* par exemple *Speaker 1, Speaker 2, Speaker 3.* L'utilisateur se positionne à l'aplomb de chaque enceinte successivement, et appuie sur le bouton correspondant à l'enceinte en question.

Pour chaque voie audio, le *smartphone* estime alors la distance de calibration et la distance opérationnelle associées à ladite voie audio en utilisant la position effective de l'enceinte.

Ainsi, sur la figure 8, on détermine au cours de la phase de calibration la position de chaque enceinte EN1, EN2, EN3, et donc les coordonnées de chaque enceinte.

L'enceinte EN1 a pour coordonnées X1, Y1 dans le repère formé par les ancres UWB. L'enceinte EN2 a pour coordonnées X2, Y2 dans le repère formé par les ancres UWB. L'enceinte EN3 a pour coordonnées X3, Y3 dans le repère formé par les ancres UWB.

Pour déterminer la distance DiU entre l'utilisateur et l'enceinte de la voie audio i, on effectue un changement de repère en calculant la distance euclidienne :

DiU = ( (Xu-Xi)^2 + ( Yu-Yi)^2 ) ^(1/2 ) pour i variant de 1 à 3, Xu, Yu étant les coordonnées de la position de l'utilisateur.

Ceci est valable lorsque l'utilisateur se trouve dans la position de calibration et dans la position courante, et donc pour calculer les distances de calibration et les distances opérationnelles.

On note que, sur la figure 8, le nombre d'ancres UWB est égal à trois, ce qui permet de définir les positions et les distances dans un espace à deux dimensions, particulièrement adapté à un appartement par exemple. On peut envisager bien sûr d'avoir un nombre d'ancres UWB différent. Par exemple, avec quatre ancres UWB, on peut définir un espace à trois dimensions, ce qui permet par exemple de gérer la hauteur dans un appartement ou bien les étages dans une maison à plusieurs étages.

On décrit maintenant un procédé d'équilibrage selon un troisième mode de réalisation de l'invention. Cette fois, les enceintes ne sont pas des enceintes omnidirectionnelles mais des enceintes directionnelles.

Chaque enceinte présente donc un diagramme de directivité qui est mesuré préalablement à l'installation de l'enceinte, c'est à dire par exemple sur la ligne de fabrication ou bien au cours de tests de développement de l'enceinte.

Le diagramme de directivité dépend de l'ouverture du cornet acoustique du haut-parleur de l'enceinte.

On note que les enceintes peuvent ou non être identiques, et peuvent ou non présenter un même diagramme de directivité.

Pour simplifier la description, on raisonne dans ce qui suit dans un plan ou espace à deux dimensions. Cependant, cette description est valable dans un espace en trois dimensions, le diagramme de directivité étant alors un diagramme en trois dimensions.

On suppose aussi pour simplifier que le diagramme de directivité est indépendant du niveau sonore.

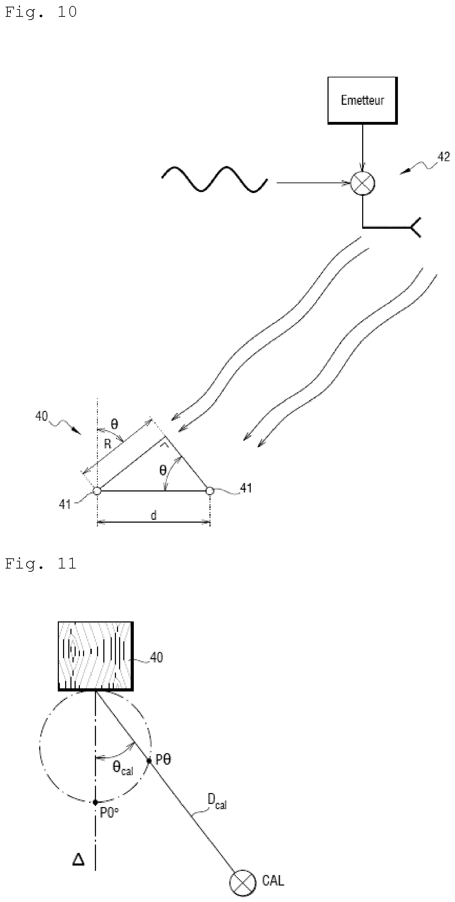

En référence aux figures 9 et 10, l'ancre UWB de l'enceinte 40 comprend cette fois deux antennes UWB 41 qui sont reliées au composant de communication UWB du dispositif de géolocalisation de l'enceinte 40.

Dans une telle configuration, il est possible de mesurer au niveau de l'ancre UWB la différence de temps de réception d'un signal UWB provenant du *smartphone* 42, et de déduire de cette différence de temps de réception un angle d'arrivée.

Les antennes UWB 41 sont positionnées de part et d'autre d'un axe de symétrie Δ du diagramme de directivité de l'enceinte 40, à égale distance de l'axe de symétrie Δ et de sorte que l'axe de symétrie Δ soit orthogonal à une droite reliant les deux antennes UWB 41.

Ainsi, il est possible de mesurer non seulement la distance entre le *smartphone* 42 et l'enceinte 40, mais aussi l'angle d'arrivée Θ du signal UWB émis par le *smartphone 42.* On obtient donc, grâce à la connaissance du diagramme de directivité, une estimation du niveau sonore émis par l'enceinte 40 dans la position et l'orientation relatives par rapport à l'utilisateur.

En référence à la figure 11, la phase de calibration du procédé d'équilibrage comprend donc l'étape d'estimer un angle de calibration $\Theta_{cal}$ entre l'axe de symétrie Δ et une direction de calibration $D_{cal}$ passant par la position de calibration CAL et par l'enceinte 40.

Dans la position CAL, l'utilisateur voit donc l'enceinte 40 sous un angle Θ, le niveau de pression acoustique d'émission associé à cet angle Θ étant P(Θ) alors que le niveau de pression acoustique d'émission associé à l'angle de 0°, c'est-à-dire à la direction de l'axe de symétrie Δ, est P(0°).

P(0°) et P(Θ) sont des caractéristiques de l'enceinte connectée mesurées préalablement suivant les données du constructeur de l'enceinte connectée.

De même, la phase opérationnelle comprend l'étape d'estimer un angle opérationnel entre l'axe de symétrie et une direction opérationnelle passant par la position courante et par l'enceinte directionnelle. Le gain opérationnel associé à la voie audio incluant l'enceinte connectée est estimé en utilisant l'angle de calibration et l'angle opérationnel.

Le diagramme de directivité est stocké soit dans la mémoire de chacune des enceintes, soit dans l'application du *smartphone* qui a connaissance dans sa mémoire de plusieurs types d'enceintes.

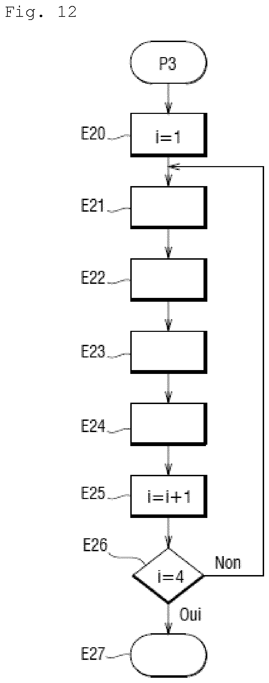

Dans l'exemple de la figure 12, le système de diffusion audio comporte quatre voies audio : voies audio 1, 2, 3, 4.

Suite au lancement de la phase de calibration (P3), la variable i est initialisée à 1 :

i = 1 (étape E20)

Dans la position de calibration, la distance de calibration entre le *smartphone* et l'enceinte de la voie audio i est mesurée grâce à la géolocalisation UWB (étape E21).

Puis, l'angle de calibration $\Theta_{cali}$ est mesuré. $\Theta_{cali}$ est l'angle de l'utilisateur dans la position de calibration vu de l'enceinte de la voie audio i (étape E22).

Le signal acoustique de calibration émis est envoyé par l'enceinte i (étape E223).

Le gain de calibration est mesuré et stocké (étape E24) .

La variable i est incrémentée :

i = i + 1 (étape E25)

On vérifie si la variable i a atteint la valeur correspondant au nombre total de voies audio du système de diffusion audio (ici égal à 4 : étape E26).

Si c'est le cas, la phase de calibration s'achève (étape E27). Sinon, la phase de calibration retourne à l'étape (E21) .

On obtient donc non seulement une adaptation vis-à-vis de la distance entre l'utilisateur et les enceintes, mais aussi une prise en compte de la directivité.

Puis, lors du déplacement de l'utilisateur, une distance opérationnelle est calculée entre l'utilisateur et chacune des enceintes comme expliqué précédemment. Le diagramme de directivité de chaque enceinte est pris en compte. On réalise en effet pour chaque enceinte la mesure d'angle opérationnel en temps réel entre l'utilisateur dans sa position courante et l'enceinte en question. Le gain opérationnel envoyé sur chaque enceinte tient compte de l'angle opérationnel et du niveau de pression acoustique d'émission de l'enceinte dans la direction correspondant audit angle opérationnel.

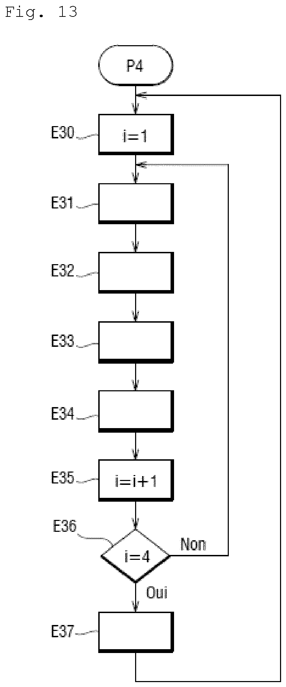

Ainsi, en référence à la figure 13, au lancement de la phase opérationnelle (P4), la variable i est initialisée à 1 :

i = 1 (étape E30).

La distance opérationnelle entre le *smartphone* et l'enceinte de la voie audio i est mesurée grâce à la géolocalisation UWB (étape E31).

L'angle opérationnel $\Theta_{opi}$ est mesuré. L'angle opérationnel $\Theta_{opi}$ est l'angle de l'utilisateur dans la position courante vu de l'enceinte de la voie audio i (étape E32) .

Le gain opérationnel est alors évalué (étape E33). Le gain opérationnel pour la voie audio i est défini par :

$$G_{opi} = G_{cali} - 20 * Log10(P(\Theta_{opi})/P(\Theta_{cali})) + 20 * Log10(D_{opi}/D_{cali}),$$

où, pour ladite voie audio i, $G_{cali}$ est le gain de calibration en dB, $D_{cali}$ est la distance de calibration, $D_{opi}$ est la distance opérationnelle, $P(\Theta_{opi})$ est un niveau de pression acoustique d'émission de l'enceinte dans la direction opérationnelle et $P(\Theta_{cali})$ est un niveau de pression acoustique d'émission de l'enceinte dans la direction de calibration.

Le gain opérationnel est appliqué sur la voie audio i (étape E34).

La variable i est incrémentée :

i = i + 1 (étape E35).

On vérifie si la variable i a atteint la valeur correspondant au nombre total de voies audio du système de diffusion audio (ici égal à 4 ; étape E36).

Si ce n'est pas le cas, la phase opérationnelle retourne à l'étape E31.

Si c'est le cas, une temporisation est appliquée, par exemple à 1s. Suite à cette temporisation, l'utilisateur a potentiellement changé de position courante et la phase opérationnelle retourne à l'étape E30.

On obtient de la sorte une table renseignée de la manière suivante :

- en colonne, on définit des niveaux de pression acoustique d'émission en fonction de l'angle $\Theta$ qui varie par exemple de -360 à +360° par pas de 10 degrés ;
- en ligne, les différentes enceintes répertoriées.

Il serait par ailleurs possible de coller des tags UWB sur des enceintes non munies d'ancre UWB, de préférence perpendiculairement à l'axe de symétrie du diagramme de directivité (c'est-à-dire comme sur la figure 9).

On note qu'il serait parfaitement possible d'avoir une mono enceinte comprennent plusieurs haut-parleurs appartenant chacun à une voie audio différente. Dans ce cas, on se ramène à ce qui a été expliqué précédemment : les haut-parleurs sont bien considérés comme appartenant à des voies audio distinctes, mais sont superposés spatialement.

Il est aussi possible d'avoir une mono enceinte intégrant une seule voie. Dans ce cas, seul le diagramme de directivité est unique. Il est pris en compte lors de la calibration comme décrit plus haut et lors du déplacement de l'utilisateur. Les mesures d'angle et de distance sont effectuées. Le gain de l'enceinte est ajusté en fonction de la distance et en fonction du diagramme de directivité afin que le niveau sonore perçu soit identique lors du déplacement de l'utilisateur.

Le procédé d'équilibrage peut être mis en oeuvre pour produire un son immersif.

Le son spatialisé dépend alors des phases des signaux.

La phase de calibration comprend donc l'étape de définir un déphasage pour produire un son immersif dans la position de calibration.

De la même façon que précédemment, le son immersif est disponible dans la position de calibration où la calibration a été réalisée.

Si aucune action n'est réalisée, le son est toujours audible lorsque l'utilisateur se déplace, mais le caractère immersif est perdu.

La phase opérationnelle comprend donc l'étape de calculer en fonction de la position courante de l'utilisateur un retard appliqué au son immersif.

Lors du déplacement de l'utilisateur, la position courante et les distances opérationnelles sont estimées.

Les temps de propagation des signaux acoustiques dans l'air sont déterminés entre chaque enceintes et l'utilisateur suivant la vitesse de propagation du son dans l'air.

Le retard appliqué au son immersif est calculé pour que, quelle que soit la position courante, l'utilisateur ait la même sensation auditive que s'il se trouvait dans la position de calibration.

On calcule le retard en appliquant la formule :

$$T_{pi} = D_{opi} / V_s,$$

où $T_{pi}$ est le temps de propagation du son entre l'enceinte i et l'utilisateur, où $D_{opi}$ est la distance opérationnelle entre la position courant de l'utilisateur et l'enceinte i, et où $V_s$ est la vitesse du son dans l'air (environ 340 m/s).

Le retard est ensuite appliqué à chacune des enceintes i.

Bien entendu, l'invention n'est pas limitée aux modes de réalisation décrits mais englobe toute variante entrant dans le champ de l'invention telle que définie par les revendications.

La phase de calibration n'est pas nécessairement mise en oeuvre alors que les enceintes sont en service, mais pourrait être réalisée en usine à la fin de la fabrication des enceintes grâce à un équipement de test comprenant un microphone.

Dans ce cas, pour mettre en oeuvre le procédé d'équilibrage selon l'invention, l'équipement mobile acquiert les paramètres de calibration obtenues grâce à l'équipement de test : gains de calibration, distances de calibration, angles de calibration, niveaux de pression acoustique d'émission de l'enceinte dans la direction de calibration, etc. Les données de calibration peuvent être stockées dans l'équipement mobile, ou bien dans un équipement distant (enceinte, serveur, etc.) auquel accède l'équipement mobile. On considère que le procédé d'équilibrage comprend une phase d'acquisition « initiale » qui consiste à acquérir les données de calibration et ce, que la phase de calibration ait été réalisée ou non par l'équipement mobile.

On note que les paramètres de calibration peuvent avoir des valeurs qui dépendent de la fréquence, car les enceintes peuvent avoir des réponses différentes suivant la fréquence. Les gains de calibration et/ou les niveaux de pression acoustique d'émission des enceintes dans les directions de calibration, utilisés au cours de la phase opérationnelle pour définir les gains opérationnels, seront donc dépendants de la fréquence du signal acoustique diffusé au cours de la phase opérationnelle par les voies audio.

L'invention peut être mise en oeuvre avec un système de diffusion audio comprenant un nombre quelconque de voies audio.

L'équipement mobile n'est pas nécessairement un *smartphone,* mais pourrait être un équipement différent : tablette, montre connectée, etc.

Ici, on a décrit que le procédé de calibration est entièrement mis en oeuvre dans l'équipement mobile. Le procédé de calibration pourrait aussi être mis en oeuvre, entièrement ou partiellement, dans un équipement fixe, par exemple dans l'une des enceintes (qui serait alors une enceinte « maître »), dans un amplificateur audio ou bien un boîtier décodeur, ou bien dans un serveur distant. Le procédé d'équilibrage peut aussi être réalisé par plusieurs de ces équipements.

Dans ce cas, l'équipement mobile transmet à ou aux équipements concernés les mesures réalisées (de position, de distance, de gain, d'angle, etc.).

On a décrit que l'équipement mobile et les enceintes communiquent en Wi-Fi grâce aux interfaces de communication Wi-Fi. Cependant, la communication n'est pas limitée au Wi-Fi, d'autres types de liaison sans fil pouvant lui être substitués, tels que par exemple le *Bluetooth* ou l'UWB.

## Revendications

1. Procédé d'équilibrage d'une pluralité de voies audio comportant chacune un haut-parleur, les haut-parleurs étant intégrés dans des enceintes (25), le procédé d'équilibrage comprenant une phase d'acquisition comportant l'étape d'acquérir un gain de calibration pour chaque voie audio, les gains de calibration ayant été définis au cours d'une phase de calibration dans une position de calibration (CAL), les gains de calibration permettant d'équilibrer les voies audio dans la position de calibration ;
   le procédé d'équilibrage comportant en outre une phase opérationnelle comprenant les étapes, réalisées en temps réel, de :

   - mettre en œuvre une géolocalisation ultra-large bande (UWB) en utilisant des ancres UWB pour définir une position courante (COUR) d'un équipement mobile (10) comprenant un composant de communication UWB (20), les ancres UWB étant intégrées dans les enceintes ;
   - pour chaque voie audio, produire un gain opérationnel qui dépend de la position courante (COUR) de l'équipement mobile (10), de la position de calibration et du gain de calibration associé à ladite voie audio, les gains opérationnels permettant d'équilibrer les voies audio dans la position courante ;
   - appliquer sur chaque voie audio le gain opérationnel associé à ladite voie audio.

2. Procédé d'équilibrage selon la revendication 1, dans lequel la phase de calibration utilise l'équipement mobile (10) comprenant un microphone (24) ou un équipement de test comprenant un microphone, et comprend les étapes de :

   - lorsque l'équipement mobile (10) ou l'équipement de test se trouve dans la position de calibration, commander une émission, via chacune des voies audio successivement, d'un signal acoustique de calibration émis, et, pour chaque voie audio :
   - acquérir en utilisant le microphone (24) de l'équipement mobile ou de l'équipement de test un signal acoustique de calibration reçu résultant de l'émission du signal acoustique de calibration émis via ladite voie audio ;
   - définir le gain de calibration à partir d'au moins une caractéristique du signal acoustiques de calibration reçu.

3. Procédé d'équilibrage selon l'une des revendications précédentes, dans lequel la phase d'acquisition comprend de plus l'étape d'acquérir, pour chaque voie audio, une distance de calibration ($D_{CALG}$, $D_{CALD}$) entre la position de calibration et une enceinte (G, D) intégrant le haut-parleur de ladite voie audio,
   et dans lequel la phase opérationnelle comprend de plus les étapes de :

- estimer, pour chaque voie audio, une distance opérationnelle ($D_{OPG}$, $D_{OPD}$) entre l'équipement mobile et l'enceinte intégrant le haut-parleur de ladite voie audio ;
- définir, pour ladite voie audio, le gain opérationnel en fonction de la distance de calibration, de la distance opérationnelle et du gain de calibration associés à ladite voie audio.

4. Procédé d'équilibrage selon la revendication 3, dans lequel le haut-parleur d'une voie audio i est intégré dans une enceinte omnidirectionnelle, et dans lequel le gain opérationnel de ladite voie audio i est tel que :
$G_{opi}=G_{cali}+20*Log10(D_{opi}/D_{cali})$, où $G_{cali}$ est le gain de calibration en dB, $D_{cali}$ est la distance de calibration et $D_{opi}$ est la distance opérationnelle associés à ladite voie audio.

5. Procédé d'équilibrage selon la revendication 3, dans lequel le haut-parleur d'une voie audio est intégré dans une enceinte directionnelle (40), dans lequel une ancre UWB comprenant deux antennes UWB (41) est intégrée dans ladite enceinte directionnelle de sorte que les antennes UWB sont positionnées de part et d'autre d'un axe de symétrie (Δ) d'un diagramme de directivité de l'enceinte directionnelle, dans lequel la phase d'acquisition comprend l'étape d'acquérir un angle de calibration entre l'axe de symétrie et une direction de calibration passant par la position de calibration et par l'enceinte directionnelle, dans lequel la phase opérationnelle comprend l'étape d'estimer un angle opérationnel entre l'axe de symétrie et une direction opérationnelle passant par la position courante et par l'enceinte directionnelle, et dans lequel le gain opérationnel associé à ladite voie audio est estimé en utilisant l'angle de calibration et l'angle opérationnel.

6. Procédé d'équilibrage selon la revendication 5, dans lequel le gain opérationnel de ladite voie audio i est défini par :

$$G_{opi}=G_{cali}-20*Log10(P(\Theta_{opi})/P(\Theta_{cali}))+20*Log10(D_{opi}/D_{cali}),$$

où, pour ladite voie audio i, $G_{cali}$ est le gain de calibration, $D_{cali}$ est la distance de calibration, $D_{opi}$ est la distance opérationnelle, $P(\Theta_{opi})$ est un niveau de pression acoustique d'émission de l'enceinte dans la direction opérationnelle et $P(\Theta_{cali})$ est un niveau de pression acoustique d'émission de l'enceinte dans la direction de calibration.

7. Procédé d'équilibrage selon l'une des revendications 2 à 6, dans lequel une enceinte intégrant le haut-parleur d'une voie audio ne comprend pas d'ancre UWB, la phase de calibration comprenant en outre les étapes de faire positionner l'équipement mobile dans une position rapprochée à proximité de ladite enceinte, de mettre en œuvre la géolocalisation UWB pour déterminer la position rapprochée, d'assimiler la position effective de l'enceinte à la position rapprochée, l'estimation de la distance de calibration et l'estimation de la distance opérationnelle associées à ladite voie audio étant réalisées en utilisant la position effective de l'enceinte.

8. Procédé d'équilibrage selon l'une des revendications précédentes, dans lesquels les gains opérationnels sont mis à jour uniquement lorsque l'équipement mobile (10) a subi un déplacement supérieur à un seuil prédéterminé par rapport à sa position courante précédente.

9. Procédé d'équilibrage selon l'une des revendications précédentes, dans lequel la phase d'acquisition comprend l'étape d'acquérir un déphasage pour produire un son immersif dans la position de calibration, et dans lequel la phase opérationnelle comprend l'étape de calculer en fonction de la position courante un retard appliqué au son immersif.

10. Procédé d'équilibrage selon l'une des revendications précédentes, dans lequel les gains de calibration et/ou les niveaux de pression acoustique d'émission des enceintes dans les directions de calibration, utilisés au cours de la phase opérationnelle pour définir les gains opérationnels, dépendent d'une fréquence d'un signal acoustique diffusé au cours de la phase opérationnelle par les voies audio.

11. Equipement comprenant un composant de traitement dans lequel est mis en oeuvre le procédé d'équilibrage selon l'une des revendications précédentes.

12. Equipement selon la revendication 11, l'équipement étant un *smartphone.*

13. Equipement selon la revendication 11, l'équipement étant une enceinte connectée.

14. Programme d'ordinateur comprenant des instructions qui conduisent l'équipement selon l'une des revendications 11 à 13 à exécuter les étapes du procédé d'équilibrage selon l'une des revendications 1 à 10.

15. Support d'enregistrement lisible par ordinateur, sur lequel est enregistré le programme d'ordinateur selon la revendication 14.

**Patentansprüche**

1. Abgleichverfahren zum Abgleich einer Vielzahl von Audiokanälen, die jeweils einen Lautsprecher umfassen, wobei die Lautsprecher in Lautsprecherboxen (25) integriert sind, wobei das Abgleichverfahren eine Erfassungsphase umfasst, die den Schritt des Erfassens einer Kalibrierungsverstärkung für jeden Audiokanal umfasst, wobei die Kalibrierungsverstärkungen während einer Kalibrierungsphase in einer Kalibrierungsposition (CAL) definiert worden sind, wobei die Kalibrierungsverstärkungen das Abgleichen der Audiokanäle in der Kalibrierungsposition ermöglichen;
wobei das Abgleichverfahren ferner eine Operationsphase umfasst, die die Schritte, durchgeführt in Echtzeit, umfasst:

   - Durchführen einer Ultrabreitband-(UWB)-Geolokalisierung unter Verwendung von UWB-Ankern, um eine aktuelle Position (COUR) eines mobilen Geräts (10) zu definieren, das eine UWB-Kommunikationskomponente (20) umfasst, wobei die UWB-Anker in die Lautsprecherboxen integriert sind;
   - für jeden Audiokanal, Erzeugen einer Operationsverstärkung, die von der aktuellen Position (COUR) des mobilen Geräts (10), der Kalibrierungsposition und der mit dem genannten Audiokanal verbundenen Kalibrierungsverstärkung abhängt, wobei die Operationsverstärkungen ein Abgleichen der Audiokanäle in der aktuellen Position ermöglichen;
   - Anwenden, auf jeden Audiokanal, der mit dem genannten Audiokanal verbundenen Operationsverstärkung.

2. Abgleichverfahren nach Anspruch 1, bei dem die Kalibrierungsphase das mobile Gerät (10), das ein Mikrofon (24) umfasst, oder ein Testgerät, das ein Mikrofon umfasst, verwendet, und die Schritte umfasst:

   - wenn sich das mobile Gerät (10) oder das Testgerät in der Kalibrierungsposition befindet, Steuern eines Sendens, nacheinander über jeden der Audiokanäle, eines gesendeten akustischen Kalibrierungssignals, und für jeden Audiokanal:
   - Erfassen, indem das Mikrofon (24) des mobilen Geräts oder des Testgeräts verwendet wird, eines empfangenen akustischen Kalibrierungssignals, das aus dem Senden des gesendeten akustischen Kalibrierungssignals über den genannten Audiokanal resultiert;
   - Definieren der Kalibrierungsverstärkung anhand mindestens einer Charakteristik des empfangenen akustischen Kalibrierungssignals.

3. Abgleichverfahren nach einem der vorhergehenden Ansprüche, bei dem die Erfassungsphase ferner den Schritt des Erfassens, für jeden Audiokanal, einer Kalibrierungsdistanz ($D_{CALG}$, $D_{CALD}$) zwischen der Kalibrierungsposition und einer Lautsprecherbox (G, D), in die der Lautsprecher des genannten Audiokanals integriert ist, umfasst, und bei dem die Operationsphase ferner die Schritte umfasst:

   - Schätzen, für jeden Audiokanal, einer Operationsdistanz ($D_{OPG}$, $D_{OPD}$) zwischen dem mobilen Gerät und der Lautsprecherbox, in die der Lautsprecher des genannten Audiokanals integriert ist;
   - Definieren, für den genannten Audiokanal, der Operationsverstärkung in Abhängigkeit von der Kalibrierungsdistanz, der Operationsdistanz und der Kalibrierungsverstärkung, die mit dem genannten Audiokanal verbunden sind.

4. Abgleichverfahren nach Anspruch 3, bei dem der Lautsprecher eines Audiokanals i in eine omnidirektionale Lautsprecherbox integriert ist, und bei dem die Operationsverstärkung des genannten Audiokanals i derart ist, dass: $G_{opi}=G_{cali}+20*Log10(D_{opi}/D_{cali})$, wobei $G_{cali}$ die Kalibrierungsverstärkung in dB, $D_{cali}$ die Kalibrierungsdistanz und $D_{opi}$ die Operationsdistanz ist, die mit dem genannten Audiokanal verbunden sind.

5. Abgleichverfahren nach Anspruch 3, bei dem der Lautsprecher eines Audiokanals in eine direktionale Lautsprecherbox (40) integriert ist, bei dem ein UWB-Anker, der zwei UWB-Antennen (41) umfasst, in die genannte direktionale Lautsprecherbox integriert ist, derart, dass die UWB-Antennen zu beiden Seiten einer Symmetrieachse ($\Delta$) eines Richtdiagramms der direktionalen Lautsprecherbox positioniert sind, bei dem die Erfassungsphase den Schritt des Erfassens eines Kalibrierungswinkels zwischen der Symmetrieachse und einer Kalibrierungsrichtung, die durch die Kalibrierungsposition und durch die direktionale Lautsprecherbox verläuft, umfasst, bei dem die Operationsphase den Schritt des Schätzens eines Operationswinkels zwischen der Symmetrieachse und einer Operationsrichtung umfasst, die durch die aktuelle Position und durch die direktionale Lautsprecherbox verläuft, und bei dem die mit dem genannten Audiokanal verbundene Operationsverstärkung geschätzt wird, indem der Kalibrierungswinkel und der Operationswinkel verwendet werden.

6. Abgleichverfahren nach Anspruch 5, bei dem die Operationsverstärkung des genannten Audiokanals i definiert wird durch:

$$G_{opi}=G_{cali}-20*Log10(P(\Theta_{opi})/P\Theta_{cali}))+20*Log10(D_{opi}/D_{cali}),$$

wobei, für den genannten Audiokanal i, $G_{cali}$ die Kalibrierungsverstärkung, $D_{cali}$ die Kalibrierungsdistanz, $D_{opi}$ die Operationsdistanz, $P(\Theta_{opi})$ ein Emissions-Schalldruckpegel der Lautsprecherbox in der Operationsrichtung ist und $P(\Theta_{cali})$ ein Emissions-Schalldruckpegel der Lautsprecherbox in der Kalibrierungsrichtung ist.

7. Abgleichverfahren nach einem der Ansprüche 2 bis 6, bei dem eine Lautsprecherbox, in die der Lautsprecher eines Audiokanals integriert ist, keinen UWB-Anker umfasst, wobei die Kalibrierungsphase ferner die Schritte des Positionierens des mobilen Geräts in einer angenäherten Position in der Nähe der genannten Lautsprecherbox, des Durchführens der UWB-Geolokalisierung, zum Bestimmen der angenäherten Position, des Gleichsetzens der Ist-Position der Lautsprecherbox mit der angenäherten Position umfasst, wobei die Schätzung der Kalibrierungsdistanz und der die Schätzung der Operationsdistanz, die mit dem genannten Audiokanal verbunden sind, unter Verwendung der Ist-Position der Lautsprecherbox durchgeführt werden.

8. Abgleichverfahren nach einem der vorhergehenden Ansprüche, bei dem die Operationsverstärkungen nur aktualisiert werden, wenn das mobile Gerät (10) einer Bewegung ausgesetzt wurde, die in Bezug auf seine vorherige aktuelle Position größer als ein vorbestimmter Schwellenwert ist.

9. Abgleichverfahren nach einem der vorhergehenden Ansprüche, bei dem die Erfassungsphase den Schritt des Erfassens einer Phasenverschiebung umfasst, um einen immersiven Ton in der Kalibrierungsposition zu erzeugen, und bei dem die Operationsphase den Schritt des Berechnens, in Abhängigkeit von der aktuellen Position, einer auf den immersiven Ton angewandten Verzögerung umfasst.

10. Abgleichverfahren nach einem der vorhergehenden Ansprüche, bei dem die Kalibrierungsverstärkungen und/oder die Emissions-Schalldruckpegel der Lautsprecherboxen in den Kalibrierungsrichtungen, die während der Operationsphase verwendet werden, um die Operationsverstärkungen zu definieren, von einer Frequenz eines akustischen Signals abhängen, das während der Operationsphase über die Audiokanäle ausgestrahlt wird.

11. Gerät, umfassend eine Verarbeitungskomponente, in der das Abgleichverfahren nach einem der vorhergehenden Ansprüche durchgeführt wird.

12. Gerät nach Anspruch 11, wobei das Gerät ein Smartphone ist.

13. Gerät nach Anspruch 11, wobei das Gerät eine angeschlossene Lautsprecherbox ist.

14. Computerprogramm, umfassend Anweisungen, die das Gerät nach einem der Ansprüche 11 bis 13 veranlassen, die Schritte des Abgleichverfahrens nach einem der Ansprüche 1 bis 10 auszuführen.

15. Computerlesbarer Aufzeichnungsträger, auf dem das Computerprogramm nach Anspruch 14 gespeichert ist.

**Claims**

1. Method for balancing a plurality of audio channels each comprising a speaker, the speakers being incorporated into enclosures (25), the balancing method comprising an acquisition phase comprising the step of acquiring a calibration gain for each audio channel, the calibration gains having been defined in a calibration phase in a calibration position (CAL), the calibration gains making it possible to balance the audio channels in the calibration position;

the balancing method further comprising an operational phase comprising the steps, performed in real time, of:

- implementing ultra-wideband (UWB) geolocation by using UWB anchors to define a current position (COUR) of a mobile apparatus (10) comprising a UWB communication component (20), the UWB anchors being incorporated into the enclosures;
- for each audio channel, producing an operational gain which is dependent on the current position (COUR) of the mobile apparatus (10), on the calibration position and on the calibration gain that is associated with said audio channel, the operational gains making it possible to balance the audio channels in the current position;
- applying, to each audio channel, the operational gain associated with said audio channel.

2. Balancing method according to claim 1, wherein the calibration phase uses the mobile apparatus (10) comprising a microphone (24) or a test apparatus comprising a microphone, and comprises the steps of:

- when the mobile apparatus (10) or the test apparatus are located in the calibration position, controlling the emission, via each of the audio channels in succession, of an emitted calibration acoustic signal, and, for each audio channel:
- acquiring, by using the microphone (24) of the mobile apparatus or of the test apparatus, a received calibration acoustic signal resulting from the emission of the emitted calibration acoustic signal via said audio channel;
- defining the calibration gain on the basis of at least one characteristic of the received calibration acoustic signal.

3. Balancing method according to one of the preceding claims, wherein the acquisition phase further comprises the step of acquiring, for each audio channel, a calibration distance ($D_{CALG}$, $D_{CALD}$) between the calibration position and an enclosure (G, D) incorporating the speaker of said audio channel, and wherein the operational phase further comprises the steps of:

- estimating, for each audio channel, an operational distance ($D_{OPG}$, $D_{OPD}$) between the mobile apparatus and the enclosure incorporating the speaker of said audio channel;
- defining, for said audio channel, the operational gain according to the calibration distance, to the operational distance and to the calibration gain that are associated with said audio channel.

4. Balancing method according to Claim 3, wherein the speaker of an audio channel i is incorporated into an omnidirectional enclosure, and wherein the operational gain of said audio channel i is such that:
$G_{opi}=G_{cali}+20*Log10(D_{opi}/D_{cali})$, where $G_{cali}$ is the calibration gain in dB, $D_{cali}$ is the calibration distance and $D_{opi}$ is the operational distance that are associated with said audio channel.

5. Balancing method according to Claim 3, wherein the speaker of an audio channel is incorporated into a directional enclosure (40), wherein a UWB anchor comprising two UWB antennas (41) is incorporated into said directional enclosure such that the UWB antennas are positioned on either side of an axis of symmetry (Δ) of a directivity diagram of the directional enclosure, wherein the acquisition phase comprises the step of acquiring a calibration angle between the axis of symmetry and a calibration direction passing through the calibration position and through the directional enclosure, wherein the operational phase comprises the step of estimating an operational angle between the axis of symmetry and an operational direction passing through the current position and through the directional enclosure, and wherein the operational gain associated with said audio channel is estimated by using the calibration angle and the operational angle.

6. Balancing method according to Claim 5, wherein the operational gain of said audio channel i is defined by:

$$G_{opi}=G_{cali}-20*Log10(P(\Theta_{opi})/P(\Theta_{cali}))+20*Log10(D_{opi}/D_{cali}),$$

where, for said audio channel i, $G_{cali}$ is the calibration gain, $D_{cali}$ is the calibration distance, $D_{opi}$ is the operational distance, $P(\Theta_{opi})$ is an emission sound pressure level of the enclosure in the operational direction and $P(\Theta_{cali})$ is an emission sound pressure level of the enclosure in the calibration direction.

7. Balancing method according to one of Claims 2 to 6, wherein an enclosure incorporating the speaker of an audio channel comprises no UWB anchor, the calibration phase further comprising the steps of positioning the mobile apparatus in a close position in proximity to said enclosure, of implementing UWB geolocation in order to determine the close position, of equating the actual position of the enclosure to the close position, the estimate of the calibration distance and the estimate of the operational distance that are associated with said audio channel being produced by using the actual position of the enclosure.

8. Balancing method according to one of the preceding claims, wherein the operational gains are updated only when the mobile apparatus (10) has experienced a movement greater than a predetermined threshold with respect to its preceding current position.

9. Balancing method according to one of the preceding claims, wherein the acquisition phase comprises the step of acquiring a phase difference in order to produce an immersive sound in the calibration position, and wherein the operational phase comprises the step of calculating, according to the current position, a delay applied to the immersive sound.

10. Balancing method according to one of the preceding claims, wherein the calibration gains and/or the emission sound pressure levels of the enclosures in the calibration directions, which are used in the operational phase to define the operational gains, are dependent on a frequency of an acoustic signal broadcast in the operational phase by the audio channels.

11. Apparatus comprising a processing component in which the balancing method according to one of the preceding claims is implemented.

12. Apparatus according to Claim 11, the apparatus being a smartphone.

13. Apparatus according to Claim 11, the apparatus being a connected enclosure.

14. Computer program comprising instructions which result in the apparatus according to one of Claims 11 to 13 executing the steps of the balancing method according to one of Claims 1 to 10.

15. Computer-readable storage medium, on which the computer program according to Claim 14 is stored.

Fig. 1

Fig. 2

Fig. 3

Fig. 4

Fig. 5

Fig. 6

Fig. 7

EP 3 840 422 B1

Fig. 8

Fig. 9

21

Fig. 10

Fig. 11

Fig. 12

Fig. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20150382128 A1

- US 20130294618 A1